# EUROPEAN PATENT SPECIFICATION

(11) **EP 3 681 016 B1**
(45) Date of publication and mention of the grant of the patent: **26.07.2023**
(21) Application number: 19151340.7
(22) Date of filing: 11.01.2019
(51) Int. Cl.: H02K 3/24, H02K 3/51, H02K 9/06, H02K 9/08, H02K 9/10

(54) **GENERATOR ROTOR AND END WINDING BLOCKING MEMBER FOR A TURBOGENERATOR**
GENERATORROTOR UND ENDWICKLUNGSBLOCKIERENDES ELEMENT FÜR EINEN TURBOGENERATOR
ROTOR DE GÉNÉRATEUR ET UN ÉLÉMENT DE BLOCAGE D'ENROULEMENT D'EXTRÉMITÉ D'UN TURBOGÉNÉRATEUR

(43) Date of publication of application: 15.07.2020
(73) Proprietor: General Electric Company, Schenectady, NY 12345 (US)
(72) Inventor: WALTER, Wolfgang, 79112 Umkirch (DE); AUGE, Christian, 68309 Mannheim (DE); GVOZDEVSKIY, Denis, 71364 Winnenden (DE); HOFFMANN, Mathias, 68309 Mannheim (DE); MINUTH, Oliver, 79787 Lauchringen (DE)
(74) Representative: Novagraaf Group

(56) References cited:
- EP-A2- 1 850 458
- JP-A- H09 322 454
- US-A1- 2005 127 779
- US-A1- 2015 162 797

## Description

### TECHNICAL FIELD

The present disclosure relates to a generator rotor and a tangential and a radial blocking member suitable for insertion between two neighboring coils of a generator rotor end winding.

### BACKGROUND OF THE DISCLOSURE

During operation of a turbogenerator currents flowing through the conductor windings yield significant forces between the individual windings. Moreover, the windings of the generator rotor are subject to significant centrifugal forces. Along the length of the rotor body the windings are embedded in specific slots inside a rotor body which provide guidance and support against the acting forces. However, at the axial ends of the windings the windings extend from the rotor body. Thus, it is known to provide blocking members between adjacent winding end sections. The blocking members avoid that adjacent winding end sections get into contact with each other and ensure electric insulation between adjacent winding end sections. Moreover, they support keeping the winding end sections outside the rotor body in place and avoiding vibrations and fluttering.

Further, cooling of the conductive windings is crucial, and effective cooling of the conductive windings can considerably enhance performance and possible power rating of the rotor. Within the rotor body, the conductive windings are for instance cooled in that a cooling fluid flows through channels formed by openings or grooves in the winding. The winding end sections, however, need to be cooled by a fluid, for instance air or gas, stream flowing between or through the end windings. Efficient guiding of the cooling fluid can considerably improve turbogenerator performance and prevent local overheating. It is known in the art to provide the blocking members with protrusions, or flow channels, on the surfaces, respectively, so as to enable a flow of coolant between the blocking member and the winding end section. It is also known to provide the rotor with baffles at the radially inner and/or outer side of the winding end sections so as to maintain the cooling fluid guided between the blocking members and the winding end sections.

US 2005/0127779 and US 6,486,575 disclose blocking members which are provided with raised areas and channels therebetween so as to guide the coolant flow. The channels are shaped in a waveform extending along a circumferential or axial extent, respectively, of the blocking member when inserted in the rotor. JPH 09-322454 teaches a blocking member wherein predominantly radially extending protrusions on the faces of the blocking members are intended to guide the coolant between the winding end section and the blocking member. A similar teaching is found in DE 297 16 626. EP 2 112 746 teaches to provide dimples on the surface of the blockings so as to enhance heat transfer. JP 57-065237 teaches a turbogenerator in which a multitude of individual spacing pieces are placed between adjacent winding end sections. It might be found essential that the protruding flow guiding elements which contact the winding end sections and on which the winding end sections are effectively supported are shaped and distributed so as to ensure a robust mutual support of the winding end sections and the blocking members, guide the coolant so as to flow over as much of the surface of the winding end sections as possible, and achieve a homogenous flow of the coolant over the surface of the winding end sections. The larger individual protruding elements of blocking members are, the more may an uneven temperature distribution be encountered, as the area in which the protruding elements of the blocking members contact the winding end sections are not in contact with the cooling fluid. Moreover, as the blocking members are made from an insulating material, and as such may commonly also have a low thermal conductivity, said contact areas may suffer from reduced cooling and form hot spots. Also, recirculation areas downstream of flow guidance elements may yield negative effects of impaired cooling.

It is an object of the present disclosure to provide a generator rotor, a tangential end winding blocking member, and a radial end winding blocking member of the kind initially mentioned. In more specific aspects cooling of the winding end sections shall be improved. In a more specific aspect the guidance of the coolant shall be improved so as to achieve a more even temperature distribution in the winding end sections. In still more specific aspects the guidance of the coolant shall be provided so as to avoid hot spots, or at least decrease hot spot temperature.

This is achieved by the subject matter described in the independent claims.

Further effects and advantages of the disclosed subject matter, whether explicitly mentioned or not, will become apparent in view of the disclosure provided below.

Accordingly, disclosed is a generator rotor comprising a rotor body and a plurality of conductive windings extending along an axial extent of the rotor body. The conductive windings comprise winding end sections adjacent axial ends of the conductive windings, wherein the winding end sections are bent to comprise axially extending winding end sections and adjacent circumferentially extending winding end sections. An axial blocking member is provided between two neighboring circumferentially extending winding end sections and a tangential blocking member is provided between two neighboring axially extending winding end sections. An axial blocking member comprises a circumferentially and radially extending wall and a tangential blocking member comprises an axially and radially extending wall. At least one seal is provided between each surface of the wall of a blocking member and an adjacent winding end section. Specifically, a seal is provided between a surface of the circumferentially and radially extending wall and the adjacent circumferentially extending winding end section, and between a surface of the axially and radially extending wall and the adjacent axially extending winding end sections. The seal shall in this context broadly be understood as a sealing arrangement which may be provided as an individual sealing member but may in other embodiments also be provided integrally with the blocking member.

As to the naming convention of the blocking members it shall be noted that it has been chosen to reflect the function of the blocking member, that is, an axial blocking member blocks in an axial direction while a tangential blocking member blocks in a tangential direction.

It is further noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

A flow channel may be provided between each surface of the wall of a blocking member and an adjacent winding end section. The wall of the blocking member divides the space between two adjacent winding end sections into at least one channel adjacent a first one of the adjacent winding end sections and a second channel adjacent the second one of the adjacent winding end sections. The seal is in particular provided at a radial inner or outer end of the flow channel, and more particular at a radially inner or outer end of the blocking member. In other aspects, the seal may be provided at a radially inner end of the flow channel or at a radially inner end of the blocking member. Further, the seal may extend axially in the direction of the axial extent of a tangential blocking member and circumferentially in the direction of the circumferential extent of an axial blocking member. In embodiments, a blocking member may be provided such that the height of the flow channels, that is, the distance between a surface of a wall of the blocking member and an adjacent winding end section, is different on both sides of the wall. However, the height of the flow channel may be equal on either side of the wall of a blocking member. Further, in embodiments, the blocking members installed between different pairs of adjacent winding end sections may be provided such that the flow channels formed between the surfaces of a wall of a blocking member and the respective pair of adjacent winding end sections have different heights between different pairs of adjacent blocking members. This may be achieved in that the blocking members comprise protruding guidance structures of different height. This may serve to account for different cooling requirements.

Due to providing sealing arrangements in particular at a radially inner end of the flow channel formed between the blocking members and adjacent winding end sections, or at the radially inner end of the blocking members, a separation of the cooling flow between winding end sections and the section radially inboard of the end winding is achieved. This leads to exposure of the innermost turn's inner surface to cooling gas and thus to improved cooling of the innermost turn and hence to improved cooling at the inner part of the winding end sections. Moreover, any additional radial inner baffle may be omitted.

In certain embodiments flow guidance structures are provided protruding from a surface of the wall of a blocking member and extend into the flow channel. The flow guidance structures, as mentioned above, may on the one hand provide a contact and support surface for the adjacent winding end section, but on the other hand serve to effectively spread the coolant over the surface of the winding end section as homogenous as possible. More in particular, the flow guidance structures may comprise oblong flow guidance structures, wherein in particular a longitudinal axis of an oblong flow guidance structure extends at least essentially circumferentially, or tangentially, respectively, when provided by an axial blocking member and extends at least essentially axially when provided by a tangential blocking member. The thus provided aerodynamic shape provides for a low pressure loss of the coolant fluid and avoids or at least reduces the formation of recirculation areas downstream of the flow guidance structures. As noted above, recirculation areas or areas with locally reduced gas flow velocity may yield a negative effect on local cooling efficiency and may thus result in an uneven temperature distribution within the winding end section.

In embodiments of a generator rotor as outlined above a tangential blocking member comprises an outer axial edge facing a circumferentially extending winding end section and an inner axial edge facing an axial center of the rotor. Flow deflection structures are provided on a surface of the wall of a tangential blocking member which are shaped and configured so as to deflect a flow directed form the outer axial edge towards the inner axial edge in the respective flow channel radially inwardly.

As suggested above, a seal provided between a surface of the wall of an axial blocking member and an adjacent winding end section may extend circumferentially. Likewise, a seal provided between a surface of the wall of a tangential blocking member and an adjacent winding end section may extend axially.

As also suggested above, providing the seals, in particular at a radially inner end of flow channels formed between the blocking members and adjacent winding end sections, enables to provide a generator rotor lacking a radially inner baffle adjacent a radially inner side of the end windings. The possibility to omit a radially inner baffle yields the potential to further improve the cooling of the radially inner side of the winding end sections, and further may facilitate access for inspection for planning of maintenance and repair of the generator, and hence may result in considerable cost savings.

In certain exemplary embodiments of the generator rotor outlined above an axial blocking member is provided between each pair of neighboring circumferentially extending winding end sections and/or a tangential blocking member is provided between each pair of neighboring axially extending winding end sections.

Further disclosed is a tangential blocking member suitable for insertion between two neighboring axially extending winding end sections of a generator rotor. The tangential blocking member exhibits a generally wedge-shaped cross section tapering from a radially outer edge towards a radially inner edge, wherein the radially outer edge and radially inner edge each extend along an axial extent of the blocking member. The terms "axial" and "radial" refer to the orientation of the blocking member as intended and configured when installed in the rotor. The tangential blocking member comprises a wall extending along the axial extent and the radial extent, wherein flow guidance structures are provided on at least one surface of the wall. At least one flow guidance structure is oblong with a longitudinal axis extending predominantly along the axial extent of the tangential blocking member. "Predominantly along the axial extent" shall be construed such that the longitudinal axis of the oblong guidance structure includes an angle with the axial extent of the tangential blocking member which is 45° or less, 30° or less, or 15° or less. In embodiments, said angle is 5° or less or 3° or less, and the longitudinal axis of the oblong guidance structure may thus be said to be essentially parallel to the axial extent of the tangential blocking member. In further embodiments the longitudinal axis of the oblong guidance structure may be parallel to the axial extent of the tangential blocking member. Further, at least one flow guidance structure is provided as a flow deflection structure on the at least one surface of the wall. The flow deflection structure is adapted and configured to add a radial velocity component to an inflow predominantly directed along the axial extent of the tangential blocking member. In embodiments, the flow deflection structure is adapted and configured to deflect an inflow predominantly directed along the axial extent of the tangential blocking member into an outflow predominantly directed along the radial extent of the tangential blocking member. As to the predominant flow direction, this term shall be construed similar to the definition of "predominantly along the axial extent" above. That is, an inflow predominantly directed along the axial extent of the tangential blocking member shall be understood to have a flow direction which includes an angle with the axial extent of the tangential blocking member which is 45° or less, 30° or less, or 15° or less. In embodiments, said angle is 5° or less or 3° or less, and the inflow direction may thus be said to be essentially parallel to the axial extent of the tangential blocking member. Likewise, an outflow predominantly directed along the radial extent of the tangential blocking member shall be understood to have an outflow direction which includes an angle with the radial extent of the tangential blocking member which is 45° or less, 30° or less, or 15° or less. In embodiments, said angle is 5° or less or 3° or less, and the outflow direction may thus be said to be essentially parallel to the radial extent of the tangential blocking member. In particular, the flow deflection structure may be shaped and provided such that the outflow from the flow deflection member comprises a radially inward velocity component. The oblong flow guidance structures are intended and configured to, when the tangential blocking member is inserted between two adjacent winding end sections, guide the coolant flow in the flow channels formed between the wall of the blocking member and the winding end section, whereas due to the oblong shape and orientation of the guiding structures, the pressure loss of the coolant is minimized and the formation of recirculation zones downstream of the oblong guidance structures is minimized, if not avoided. The flow deflection structures further serve to induce, in connection with the neighboring structures when the blocking member is installed, a flow pattern at an axial end of the blocking member which supports discharging the coolant flow from the flow channel while improving cooling of the adjacent winding end section at the slot exits.

In embodiments of the above-described tangential blocking member the flow deflection structure is a closest one of the flow guidance structures when seen from one axial edge of the tangential blocking member. Thus, appropriate cooling of an adjacent winding end section is insured when the tangential blocking member is mounted between two adjacent axially extending winding end sections.

Further in particular, the flow guidance structures are protruding structures protruding from the at least one surface of the wall of the blocking member. Moreover, the wall may be a closed wall so as to provide a division and sealing between the two lateral sides of the wall, that is, the flow channels formed between the blocking member and the two adjacent winding end sections when the blocking member is installed between two adjacent winding end sections, are fluidly isolated from each other. It is understood that said channels may be fluidly connected upstream so as to be connected to a common coolant supply and may further be connected downstream so as to discharge into a common coolant discharge line or plenum.

Still further disclosed is an axial blocking member suitable for insertion between two neighboring circumferentially extending winding end sections of a generator rotor. The axial blocking member has two circumferential ends and a circumferential extent between the two circumferential ends, a radially outer edge, a radially inner edge, and a radial extent therebetween. The radially outer edge and radially inner edge extend along the circumferential extent of the axial blocking member. The axial blocking member comprises a wall extending along the circumferential extent and the radial extent of the blocking member. Flow guidance structures are provided on at least one surface of the wall, wherein at least one flow guidance structure is oblong with a longitudinal axis extending predominantly tangentially to the circumferential extent of the axial blocking member. "Predominantly tangentially to the circumferential extent" shall be construed such that the longitudinal axis of the oblong guidance structure includes an angle with a tangent to the circumference at the location of the oblong structure which is 45° or less, 30° or less, or 15° or less. In embodiments, said angle is 5° or less or 3° or less, and the longitudinal axis of the oblong guidance structure may thus be said to be essentially tangential. In further embodiments the longitudinal axis of the oblong guidance structure may be parallel to said tangent, or tangential. At least one flow guidance structure is provided as a flow deflection structure on the at least one surface of the wall, wherein the flow deflection structure is adapted and configured to add a radial velocity component to an inflow predominantly directed tangentially to the circumferential extent of the axial blocking member. In embodiments, the flow deflection structure is adapted and configured to deflect an inflow predominantly directed tangentially to the circumferential extent of the axial blocking member into an outflow predominantly directed along the radial extent of the axial blocking member. As to the predominant flow direction, this term shall be construed similar to the definition of "predominantly tangential to the circumferential extent" above. That is, an inflow predominantly directed tangential to the circumferential extent of the axial blocking member will have a flow direction which includes an angle with a tangent to the circumference at the location of the flow deflection structure which is 45° or less, 30° or less, or 15° or less. In embodiments, said angle is 5° or less or 3° or less, and the inflow direction may thus be said to be essentially tangential to the circumferential extent of the axial blocking member. Likewise, an outflow predominantly directed along the radial extent of the axial blocking member will be understood to have an outflow direction which includes an angle with the radial extent of the axial blocking member which is 45° or less, 30° or less, or 15° or less. In embodiments, said angle is 5° or less or 3° or less, and the outflow direction may thus be said to be essentially parallel to the radial extent of the axial blocking member. In particular, the flow deflection structure may be shaped and provided such that the outflow from the flow deflection structure comprises a radially inward velocity component. The oblong flow guidance structures are then intended, when the axial blocking member is inserted between two adjacent circumferentially extending winding end sections, to guide the coolant flow in the flow channels formed between the wall of the blocking member and the winding end section, whereas, due to the oblong shape and orientation of the guiding structures, the pressure loss of the coolant is minimized and the formation of recirculation zones downstream of the guidance structures is minimized, if not avoided. The deflection structures support discharging the coolant flow from the flow channel, reduce pressure losses, and improve cooling of the adjacent winding end section in the discharge region of the flow channel.

In embodiments of the axial blocking member at least one flow divider is provided protruding from the at least one surface of the wall. Flow guidance structures are provided on the at least one surface of the wall on each circumferential side of the flow divider. Further in particular at least one oblong flow guidance structure is provided on each circumferential side of the flow divider and at least one flow deflection structure is provided on each circumferential side of the flow divider. The flow deflection structure is the flow guidance structure closest to the flow divider.

Further in particular, the flow guidance structures are protruding structures protruding from the at least one surface of the wall of the blocking member. Moreover, the wall may be a closed wall so as to provide a division and sealing between the two lateral sides of the wall, that is, the flow channels formed between the blocking member and two adjacent winding end sections when the blocking member is installed between two adjacent winding end sections are fluidly isolated from each other. It is understood that said channels may be fluidly connected upstream so as to be connected to a common coolant supply. The channels formed between a blocking and the adjacent winding sections on either side of the wall may further be connected downstream so as to discharge into a common discharge line or plenum.

### BRIEF DESCRIPTION OF THE DRAWINGS

The subject matter of the present disclosure is now to be explained in more detail by means of selected exemplary embodiments shown in the accompanying drawings. The figures show
- Fig. 1: a first sectional view of a winding end section of a generator rotor;
- Fig. 2: a second sectional view of a winding end section of the generator rotor with an axial end plate and a radially outer retaining ring being mounted;
- Fig. 3: a detailed view of a tangential blocking member as set forth in the present disclosure; and
- Fig. 4: a detailed view of an axial blocking member as set forth in the present disclosure.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

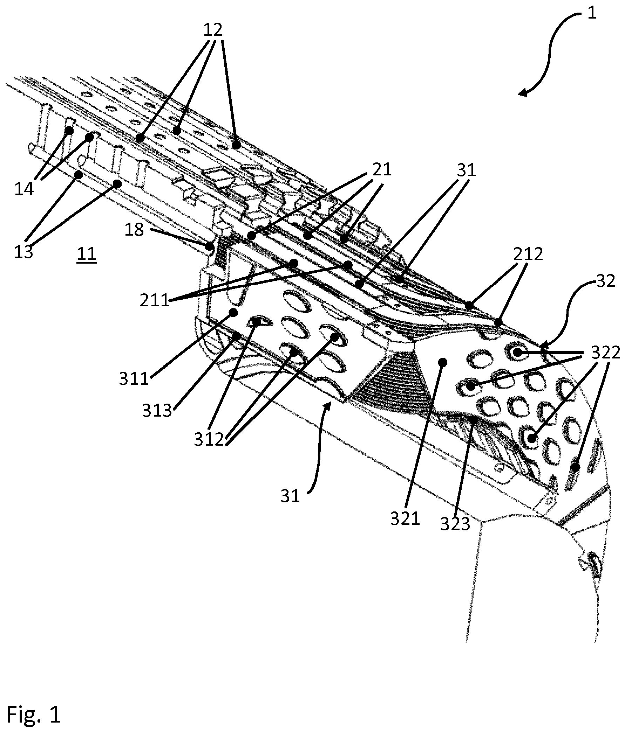

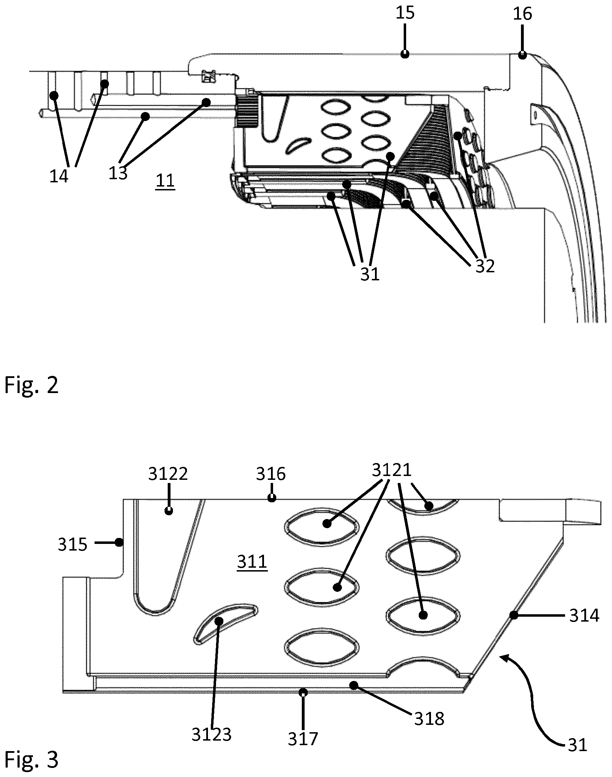

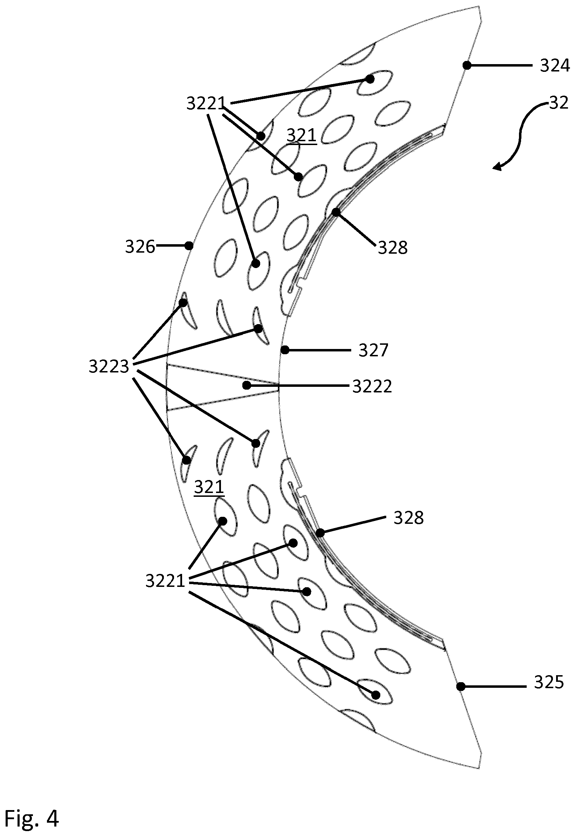

Figure 1 shows a sectional view of a part of a generator rotor 1 including a winding end section. Along the extent of the rotor body 11 the conductive windings 21 are embedded in axially extending slots 12 provided in the rotor body. At axial ends of the rotor body the conductive windings 21 cantilever out of the rotor body and are bent in the winding end sections, thereby forming axially extending winding end sections 211 and circumferentially extending winding end sections 212. Discharge channels 13 and 14 are provided in ridges of the rotor body between the slots. Axially extending discharge channels 13 are in fluid communication with radially extending discharge channels 14 which are open at a radially outer surface of the rotor body. Axially extending discharge channels 13 comprise openings 18 facing an edge of a tangential blocking member 31. Discharge channels 13, 14 serve to receive and discharge used end winding coolant, as will become appreciated in view of the description below. Said end winding coolant may enter the axially extending discharge channels 13 though openings 18 and may be discharged from the rotor body through the radially extending discharge channels 14. The electric currents flowing through the conductive members 21 during operation of the generator cause, on the one hand, thermal loading of the conductive members, which is, in the region of the rotor body, accounted for by the cooling described above. On the other hand, electric and magnetic forces become effective between the conductive members. Moreover, due to the rotation of the generator rotor, centrifugal forces act on the conductive members or windings. Along the extent in which the conductive members are embedded in the slots of the rotor body those forces are supported. However, appropriate cooling must also be ensured for the winding end sections cantilevering from the axial ends of the rotor body. It must moreover be ensured that the distance and electric insulation between the winding end sections is maintained so as to avoid short-circuits, despite the above-mentioned electric and magnetic forces acting between and mechanic forces acting on the winding end sections. This is achieved in that a tangential blocking member 31 is installed between each pair of neighboring axially extending winding end sections 211 and an axial blocking member 32 is installed between each pair of neighboring circumferentially extending winding end sections. A tangential blocking member 31 comprises an axially and radially extending wall 311. On the surfaces of the wall flow guidance structures 311 are provided and protrude from the respective surface of the wall 311. Likewise, an axial blocking member 32 comprises a circumferentially and radially extending wall 321. On the surfaces of the wall, flow guidance structures 322 are provided and protrude from the respective surface of the wall 321. The protruding flow guidance structures 312, 322 may also serve as distance elements between the wall 311, 321 and an adjacent winding end section. They may further serve to contact and support the adjacent winding end section. The blocking member herein disclosed comprises a multitude of comparatively small individual guidance structures, so that, when they contact the winding end section, the surface of the winding end section covered by the guidance structure is comparatively small. Moreover, the flow guidance structures are at least essentially evenly distributed. The result is a less inhomogeneous temperature distribution in the winding end sections, avoiding the formation of hot spots, or at least reducing the temperature of hot spots. Due to the protruding guidance structures a flow channel is formed between a surface of the wall of the blocking member and the adjacent winding end section. On the radially inner ends of the blocking members, sealing arrangements or seals 313 and 323, respectively, are provided so as to provide sealing between the blocking member and the adjacent winding end sections and close said flow channels on a radial inner side along the extent of the seals. During operation, a coolant is introduced into the flow channels in the bent region of the winding end section, between the tangential and the axial blocking member. The coolant flow will be outlined in more detail in connection with figures 3 and 4. The blocking members installed between different pairs of adjacent winding end sections may comprise protruding guidance structures of different heights. Thus, the flow channels formed between the surfaces of a wall of a blocking member and the respective pair of adjacent winding end sections may have different heights between different pairs of adjacent winding end sections. This may serve to account for different cooling requirements.

With reference to figure 2, a different view of an axial end section of the windings of the generator rotor is depicted. A retaining ring 15 is arranged radially outside and around the winding end sections. An axial end plate 16 is provided to axially terminate the winding section of the rotor. The winding end sections are free of a radially inner baffle or any member/component installed from the radially inner side of the end winding, as leakage of coolant on the radially inner side of the winding end sections is avoided by the sealing arrangements provided between the winding end sections and the blocking members adjacent the respective radially inner ends.

Figure 3 shows a more detailed view of a tangential blocking member. Tangential blocking member 31 has two axial edges 314 and 315, a radially outer edge 316 and a radially inner edge 317. It will be appreciated that an axial extent of tangential blocking member 31 is defined between the axial edges 314 and 315, while a radial extent is defined between radially outer edge 316 and radially inner edge 317. When installed between winding end sections, axial edge 315 is intended to face the rotor body and may thus also be referred to as the axially inner edge. Opposed axial edge 314 may accordingly be referred to as the axially outer edge. In the exemplary embodiment shown, a keyway 318 is provided adjacent radially inner edge 317 and configured to receive a sealing member for sealing between axial blocking member 31 and the adjacent winding end sections when blocking member 31 is installed. However, the seal may in other embodiments be provided integrally with blocking member 31 adjacent radially inner edge 317. Oblong flow guidance structures 3121 are provided protruding from a surface of the wall of tangential blocking member 31. The long axes of the oblong flow guidance structures are at least essentially parallel to the axial extent of the tangential blocking member. A terminal structure 3122 and a flow deflection structure 3123 serve to deflect an axial flow from outer edge 314 directed towards inner axial edge 315 into a radially inward direction. As outlined in connection with figure 1, when blocking member 31 is installed between adjacent winding end sections, and the generator rotor is operated, coolant is introduced at axially outer edge 314. Axially outer edge 314 is slanted with respect to the radial extent of the blocking member so as to facilitate coolant introduced from a radially inner side of the rotor to flow into the channel which is formed between the blocking member and an adjacent winding end section when the blocking member is installed. Oblong guidance structures 3121 guide the coolant flow in an axial direction while spreading it over the surface of the winding end section. Terminal structure 3122 prevents the coolant from being right away discharged through openings 18 and channels 13, 14 shown in figure 1. Rather, the coolant is forced onto a meandering trajectory going first radially inward and thereafter radially outward before entering channels 13 and 14, as the skilled person will appreciate by virtue of figures 1 and 2. This effect is further supported by flow deflection structure 3123 and supports uniform cooling.

Figure 4 depicts a more detailed view of an axial blocking member 32. Axial blocking member 32 extends circumferentially between two circumferential edges 324 and 325, and radially between radially outer edge 326 and radially inner edge 327. The circumferential edges 324, 325 are slanted with respect to the radial extent of the blocking member so as to facilitate coolant introduced from a radially inner side of the rotor, when the blocking member is installed as intended, to flow into the channel which is formed between the blocking member and an adjacent winding end section. In the exemplary embodiment shown, keyways 328 are provided adjacent radially inner edge 327 and adapted and configured to receive a sealing member for sealing between axial blocking member 32 and the adjacent winding end sections when blocking member 32 is installed. However, the seal may in other embodiments be provided integrally with blocking member 32 adjacent radially inner edge 327. A flow divider 3222 protrudes from the surface of the wall of blocking member 32 and essentially divides a space formed between axial blocking member 32 and an adjacent circumferentially extending winding end section into two flow channels on either circumferential side of the flow divider 3222. Oblong flow guidance structures 3221 and flow deflection structures 3223 are provided protruding from a surface of the wall 321 of axial blocking member 32 on either circumferential side of flow divider 3222. The oblong axes of the oblong flow guidance structures are at least essentially tangential to the circumferential extent of the axial blocking member. Flow deflection structures 3223 are the flow guidance structures closest to flow divider 3222 on both sides of the flow divider. Flow deflection structures 3223 jointly with flow divider 3222 serve to deflect coolant flowing from either circumferential edge directed towards the flow divider 3222 into a radially inward direction. As outlined in connection with figure 1, when blocking member 32 is installed between adjacent circumferentially extending winding end sections, and the generator rotor is operated, coolant is introduced at circumferential edges 324, 325. Circumferential edges 324, 325 are slanted with respect to the radial extent of the blocking member so as to facilitate coolant introduced from a radially inner side of the rotor to flow into the channel which is formed between the blocking member and an adjacent winding end section when the blocking member is installed. Oblong guidance structures 3221 guide the coolant flow in a circumferential direction while spreading it over the surface of the winding end section. As the flow approaches flow divider 3222, it is deflected into a radially inward direction by flow divider 3222 and flow deflection structures 3223 and is discharged on the radially inner side of the winding end sections.

The blocking members may be made from any suitable material yielding a sufficient mechanical strength at the foreseen operating temperatures and are electrically isolating, such as, while not limited to, polymers or fiber reinforced resins.

While the subject matter of the disclosure has been explained by means of exemplary embodiments, it is understood that these are in no way intended to limit the scope of the claimed invention.

## Claims

1. A generator rotor (1), the rotor comprising a rotor body (11) and a plurality of conductive windings (21) extending along an axial extent of the rotor body and being embedded in axially extending slots (12) provided in the rotor body (11), the conductive windings (21) further comprising winding end sections (211, 212) adjacent axial ends of the conductive windings (21), wherein the winding end sections (211, 212) are bent to comprise axially extending winding end sections (211) and adjacent circumferentially extending winding end sections (212), wherein further at least on axial blocking member (32) is provided between two neighboring circumferentially extending winding end sections (212) and at least one tangential blocking member (31) is provided between two neighboring axially extending winding end sections (211),
wherein the axial blocking member (32) comprises a circumferentially and radially extending wall (321) and the tangential blocking member (31) comprises an axially and radially extending wall (311), an outer axial edge (314) facing a circumferentially extending winding end section (212) and an inner axial edge (315) facing an axial center of the rotor (1),
wherein a seal (313, 323) is provided between a surface of the circumferentially and radially extending wall (321) and the adjacent circumferentially extending winding end section (212), and between a surface of the axially and radially extending wall (311) and the adjacent axially extending winding end sections (211),
wherein discharge channels (13, 14) are provided in ridges of the rotor body (11) between the slots (12), wherein axially extending discharge channels (13) are in fluid communication with radially extending discharge channels (14) which are open at a radially outer surface of the rotor body (11) and wherein the axially extending discharge channels (13) comprise openings (18) facing an edge of a tangential blocking member (31),
wherein a flow channel is provided between each surface of the wall (311, 321) of the blocking members (31, 32) and the adjacent winding end section (211, 212), and the seal (313, 323) is arranged at a radially inner end of the flow channel, wherein flow guidance structures (312, 322) are provided protruding from the surface of the wall (311, 321) of the blocking members (31, 32) and extending into the flow channel,
wherein a terminal structure (3122) of the tangential blocking member (31) prevents the coolant from being directly discharged through openings (18) and discharge channels (13, 14) by forcing the coolant onto a meandering trajectory going first radially inward and thereafter radially outward before entering discharge channels (13, 14),
**characterized in that** oblong guidance structures (3121) of the tangential blocking member (31) guide the coolant flow in an axial direction while spreading it over the surface of the winding end section, and that a flow deflection structure (3123) is arranged in an axial direction between the oblong guidance structures (3121) and the terminal structure (3122), wherein the flow deflection structure (3123) serves to deflect an axial flow directed from the outer axial edge (314) towards the inner axial edge (315) of the tangential blocking member (31) into a radially inwardly direction.

2. The generator rotor (1) according to the preceding claim, **characterized in that** a longitudinal axis of an oblong flow guidance structure (312, 322) extends at least essentially circumferentially or tangentially when provided by an axial blocking member (32) and extends at least essentially axially when provided by a tangential blocking member (31).

3. The generator rotor (1) according to any of the preceding claims, wherein the flow deflection structure (3123) has an edge facing the flow guidance structures (312, 322) that is inclined relative to the axial direction

4. The generator rotor (1) according to any of the preceding claims, wherein the tangential blocking member (31) has a radially outer edge (316) and a radially inner edge (317) and wherein the flow deflection structure (3123) has a radially inner end that is located at a position closer to the radially inner edge (317) than a radially inner end of the terminal structure (3122).

5. The generator rotor (1) according to any of the preceding claims, wherein the tangential blocking member (31) has a radially outer edge (316) and a radially inner edge (317) and wherein the flow deflection structure (3123) has a radially outer end that is located at a position farther away from the radially inner edge (317) than a radially inner end of the terminal structure (3122).

6. The generator rotor (1) according to any of the preceding claims, wherein the seal (323) provided between the surface of the wall (321) of the axial blocking member (32) and the adjacent winding end section (212) extends at least essentially circumferentially.

7. The generator rotor (1) according to any of the preceding claims, wherein the seal (313) provided between the surface of the wall (311) of the tangential blocking member (31) and the adjacent winding end section (211) extends at least essentially axially.

8. The generator rotor (1) according to any of the preceding claims, wherein between each pair of neighboring circumferentially extending winding end sections (212) one axial blocking member (32) is provided.

9. The generator rotor (1) according to any of the preceding claims, wherein between each pair of neighboring axially extending winding end sections (211) one tangential blocking member (31) is provided.

## Patentansprüche

1. Generatorrotor (1), wobei der Rotor einen Rotorkörper (11) und eine Vielzahl von leitfähigen Wicklungen (21) umfasst, die sich entlang einer axialen Erstreckung des Rotorkörpers erstreckt und in sich axial erstreckende Schlitze (12) eingebettet ist, die in dem Rotorkörper (11) bereitgestellt sind, wobei die leitfähigen Wicklungen (21) ferner Wicklungsendabschnitte (211, 212) angrenzend zu axialen Enden der leitfähigen Wicklungen (21) umfassen, wobei die Wicklungsendabschnitte (211, 212) gebogen sind, um sich axial erstreckende Wicklungsendabschnitte (211) und angrenzende sich umlaufend erstreckende Wicklungsendabschnitte (212) zu umfassen, wobei ferner mindestens ein axiales Blockierelement (32) zwischen zwei benachbarten sich umlaufend erstreckenden Wicklungsendabschnitten (212) bereitgestellt ist, und mindestens ein tangentiales Blockierelement (31) zwischen zwei benachbarten sich axial erstreckenden Wicklungsendabschnitten (211) bereitgestellt ist,
wobei das axiale Blockierelement (32) eine sich umlaufend und radial erstreckende Wand (321) umfasst und das tangentiale Blockierelement (31) eine sich axial und radial erstreckende Wand (311), eine äußere axiale Kante (314), die einem sich umlaufend erstreckenden Wicklungsendabschnitt (212) zugewandt ist, und eine innere axiale Kante (315) umfasst, die einer axialen Mitte des Rotors (1) zugewandt ist, wobei eine Dichtung (313, 323) zwischen einer Oberfläche der sich umlaufend und radial erstreckenden Wand (321) und dem angrenzenden sich umlaufend erstreckenden Wicklungsendabschnitt (212) und zwischen einer Oberfläche der sich axial und radial erstreckenden Wand (311) und der angrenzenden sich axial erstreckenden Wicklungsendabschnitte (211) bereitgestellt ist,
wobei Abflusskanäle (13, 14) in Rippen des Rotorkörpers (11) zwischen den Schlitzen (12) bereitgestellt sind, wobei sich axial erstreckende Abflusskanäle (13) in Fluidverbindung mit sich radial erstreckenden Abflusskanälen (14) sind, die an einer radial äußeren Oberfläche des Rotorkörpers (11) offen sind und wobei die sich axial erstreckenden Abflusskanäle (13) Öffnungen (18) umfassen, die einer Kante eines tangentialen Blockierelements (31) zugewandt sind,
wobei ein Strömungskanal zwischen jeder Oberfläche der Wand (311, 321) der Blockierelemente (31, 32) und dem angrenzenden Wicklungsendabschnitt (211, 212) bereitgestellt ist und die Dichtung (313, 323) an einem radial inneren Ende des Strömungskanals angeordnet ist, wobei Strömungsführungsstrukturen (312, 322) bereitgestellt sind, die von der Oberfläche der Wand (311, 321) der Blockierelemente (31, 32) vorstehen und sich in den Strömungskanal erstrecken,
wobei eine Abschlussstruktur (3122) des tangentialen Blockierelements (31) verhindert, dass das Kühlmittel durch Öffnungen (18) und Abflusskanäle (13, 14) direkt abfließt, mittels einem Zwingen des Kühlmittels auf eine mäanderförmige Bahn, die zuerst radial nach innen und danach radial nach außen verläuft, bevor es in die Abflusskanäle (13, 14) eintritt,
**dadurch gekennzeichnet, dass** längliche Führungsstrukturen (3121) des tangentialen Blockierelements (31) die Kühlmittelströmung in einer axialen Richtung führen, während es über die Oberfläche des Wicklungsendabschnitts ausgebreitet wird, und dass eine Strömungsumlenkstruktur (3123) in einer axialen Richtung zwischen den länglichen Führungsstrukturen (3121) und der Abschlussstruktur (3122) angeordnet ist, wobei die Strömungsumlenkstruktur (3123) dazu dient, eine von der äußeren axialen Kante (314) gerichtete axiale Strömung zu der inneren axialen Kante (315) des tangentialen Blockierelements (31) hin in eine radial nach innen gerichtete Richtung umzulenken.

2. Generatorrotor (1) nach dem vorstehenden Anspruch,
**dadurch gekennzeichnet, dass** eine Längsachse einer länglichen Strömungsführungsstruktur (312, 322) sich mindestens im Wesentlichen umlaufend oder tangential erstreckt, wenn sie mittels eines axialen Blockierelements (32) bereitgestellt wird und sich mindestens im Wesentlichen axial erstreckt, wenn sie mittels eines tangentialen Blockierelements (31) bereitgestellt wird.

3. Generatorrotor (1) nach einem der vorstehenden Ansprüche, wobei die Strömungsumlenkstruktur (3123) eine Kante aufweist, die den Strömungsführungsstrukturen (312, 322) zugewandt ist, die relativ zu der axialen Richtung geneigt ist

4. Generatorrotor (1) nach einem der vorstehenden Ansprüche, wobei das tangentiale Blockierelement (31) eine radial äußere Kante (316) und eine radial innere Kante (317) aufweist und wobei die Strömungsumlenkstruktur (3123) ein radial inneres Ende aufweist, das sich an einer Position befindet, die näher an der radial inneren Kante (317) ist als ein radial inneres Ende der Abschlussstruktur (3122).

5. Generatorrotor (1) nach einem der vorstehenden Ansprüche, wobei das tangentiale Blockierelement (31) eine radial äußere Kante (316) und eine radial innere Kante (317) aufweist und wobei die Strömungsumlenkstruktur (3123) ein radial äußeres Ende aufweist, das sich an einer Position befindet, die weiter von der radial inneren Kante (317) entfernt ist als ein radial inneres Ende der Abschlussstruktur (3122).

6. Generatorrotor (1) nach einem der vorstehenden Ansprüche, wobei sich die Dichtung (323), die zwischen der Oberfläche der Wand (321) des axialen Blockierelements (32) und dem angrenzenden Wicklungsendabschnitt (212) bereitgestellt ist, mindestens im Wesentlichen umlaufend erstreckt.

7. Generatorrotor (1) nach einem der vorstehenden Ansprüche, wobei sich die Dichtung (313), die zwischen der Oberfläche der Wand (311) des tangentialen Blockierelements (31) und dem angrenzenden Wicklungsendabschnitt (211) bereitgestellt ist, mindestens im Wesentlichen axial erstreckt.

8. Generatorrotor (1) nach einem der vorstehenden Ansprüche, wobei zwischen jedem Paar benachbarter sich umlaufend erstreckender Wicklungsendabschnitte (212) ein axiales Blockierelement (32) bereitgestellt ist.

9. Generatorrotor (1) nach einem der vorstehenden Ansprüche, wobei zwischen jedem Paar benachbarter sich axial erstreckender Wicklungsendabschnitte (211) ein tangentiales Blockierelement (31) bereitgestellt ist.

## Revendications

1. Rotor de générateur (1), le rotor comprenant un corps de rotor (11) et une pluralité d'enroulements conducteurs (21) s'étendant le long d'une étendue axiale du corps de rotor et étant intégrés dans des fentes (12) s'étendant axialement prévues dans le corps de rotor (11), les enroulements conducteurs (21) comprenant en outre des sections d'extrémité d'enroulement (211, 212) adjacentes aux extrémités axiales des enroulements conducteurs (21), dans lequel les sections d'extrémité d'enroulement (211, 212) sont courbées pour comprendre des sections d'extrémité d'enroulement (211) s'étendant axialement et des sections d'extrémité d'enroulement (212) adjacentes s'étendant circonférentiellement, dans lequel en outre au moins un élément de blocage axial (32) est prévu entre deux sections d'extrémité d'enroulement (212) voisines s'étendant circonférentiellement et au moins un élément de blocage tangentiel (31) est prévu entre deux sections d'extrémité d'enroulement (211) voisines s'étendant axialement,
dans lequel l'élément de blocage axial (32) comprend une paroi s'étendant circonférentiellement et radialement (321) et l'élément de blocage tangentiel (31) comprend une paroi s'étendant axialement et radialement (311), un bord axial externe (314) orienté vers une section d'extrémité d'enroulement (212) s'étendant circonférentiellement et un bord axial interne (315) orienté vers un centre axial du rotor (1), dans lequel un joint d'étanchéité (313, 323) est prévu entre une surface de la paroi s'étendant circonférentiellement et radialement (321) et la section d'extrémité d'enroulement (212) s'étendant circonférentiellement adjacente, et entre une surface de la paroi s'étendant axialement et radialement (311) et les sections d'extrémité d'enroulement (211) s'étendant axialement adjacentes,
dans lequel des canaux de décharge (13, 14) sont prévus dans des crêtes du corps de rotor (11) entre les fentes (12), dans lequel des canaux de décharge (13) s'étendant axialement sont en communication fluidique avec des canaux de décharge (14) s'étendant radialement qui sont ouverts au niveau d'une surface radialement externe du corps de rotor (11) et dans lequel les canaux de décharge (13) s'étendant axialement comprennent des ouvertures (18) orientées vers un bord d'un élément de blocage tangentiel (31),
dans lequel un canal d'écoulement est prévu entre chaque surface de la paroi (311, 321) des éléments de blocage (31, 32) et la section d'extrémité d'enroulement (211, 212) adjacente, et le joint d'étanchéité (313, 323) est agencé au niveau d'une extrémité radialement interne du canal d'écoulement, dans lequel des structures de guidage d'écoulement (312, 322) sont prévues en saillie de la surface de la paroi (311, 321) des éléments de blocage (31, 32) et s'étendant dans le canal d'écoulement,
dans lequel une structure terminale (3122) de l'élément de blocage tangentiel (31) empêche le réfrigérant d'être directement déchargé à travers des ouvertures (18) et des canaux de décharge (13, 14) en forçant le réfrigérant sur une trajectoire sinueuse allant d'abord radialement vers l'intérieur et ensuite radialement vers l'extérieur avant d'entrer dans des canaux de décharge (13, 14),
**caractérisé en ce que** des structures de guidage oblongues (3121) de l'élément de blocage tangentiel (31) guident l'écoulement de réfrigérant dans une direction axiale tout en l'étalant sur la surface de la section d'extrémité d'enroulement, et **en ce qu'**une structure de déviation d'écoulement (3123) est agencée dans une direction axiale entre les structures de guidage oblongues (3121) et la structure terminale (3122), dans lequel la structure de déviation d'écoulement (3123) sert à dévier un écoulement axial dirigé depuis le bord axial externe (314) vers le bord axial interne (315) de l'élément de blocage tangentiel (31) dans une direction radialement vers l'intérieur.

2. Rotor de générateur (1) selon la revendication précédente,
**caractérisé en ce qu'**un axe longitudinal d'une structure de guidage d'écoulement oblongue (312, 322) s'étend au moins essentiellement circonférentiellement ou tangentiellement lorsqu'elle est fournie par un élément de blocage axial (32) et s'étend au moins essentiellement axialement lorsqu'elle est fournie par un élément de blocage tangentiel (31).

3. Rotor de générateur (1) selon l'une quelconque des revendications précédentes, dans lequel la structure de déviation d'écoulement (3123) a un bord orienté vers les structures de guidage d'écoulement (312, 322) qui est incliné par rapport à la direction axiale

4. Rotor de générateur (1) selon l'une quelconque des revendications précédentes, dans lequel l'élément de blocage tangentiel (31) a un bord radialement externe (316) et un bord radialement interne (317) et dans lequel la structure de déviation d'écoulement (3123) a une extrémité radialement interne qui est située au niveau d'une position plus proche du bord radialement interne (317) qu'une extrémité radialement interne de la structure terminale (3122).

5. Rotor de générateur (1) selon l'une quelconque des revendications précédentes, dans lequel l'élément de blocage tangentiel (31) a un bord radialement externe (316) et un bord radialement interne (317) et dans lequel la structure de déviation d'écoulement (3123) a une extrémité radialement externe qui est située au niveau d'une position plus éloignée du bord radialement interne (317) qu'une extrémité radialement interne de la structure terminale (3122).

6. Rotor de générateur (1) selon l'une quelconque des revendications précédentes, dans lequel le joint d'étanchéité (323) prévu entre la surface de la paroi (321) de l'élément de blocage axial (32) et la section d'extrémité d'enroulement (212) adjacente s'étend au moins sensiblement circonférentiellement.

7. Rotor de générateur (1) selon l'une quelconque des revendications précédentes, dans lequel le joint d'étanchéité (313) prévu entre la surface de la paroi (311) de l'élément de blocage tangentiel (31) et la section d'extrémité d'enroulement (211) adjacente s'étend au moins essentiellement axialement.

8. Rotor de générateur (1) selon l'une quelconque des revendications précédentes, dans lequel entre chaque paire de sections d'extrémité d'enroulement (212) voisines s'étendant circonférentiellement un élément de blocage axial (32) est prévu.

9. Rotor de générateur (1) selon l'une quelconque des revendications précédentes, dans lequel entre chaque paire de sections d'extrémité d'enroulement (211) voisines s'étendant axialement un élément de blocage tangentiel (31) est prévu.
